# EUROPEAN PATENT SPECIFICATION

(11) **EP 3 264 710 B1**
(45) Date of publication and mention of the grant of the patent: **24.04.2019**
(21) Application number: 16305779.7
(22) Date of filing: 28.06.2016
(51) Int. Cl.: H04L 29/06, H04W 4/70, H04W 12/08, H04L 12/24, H04W 4/00

(54) **SECURELY TRANSFERRING THE AUTHORIZATION OF CONNECTED OBJECTS**
SICHERE ÜBERTRAGUNG DER AUTORISIERUNG VON VERBUNDENEN OBJEKTEN
TRANSFERT SÉCURISÉ DE L'AUTORISATION D'OBJETS CONNECTÉS

(43) Date of publication of application: 03.01.2018
(73) Proprietor: Alcatel Lucent, 91620 Nozay (FR)
(72) Inventor: VAN DE VELDE, Thierry, 2018 ANTWERP (BE); VAN DE VELDE, Gunter, 2018 ANTWERP (BE); SAHNEY, Raja, 2018 ANTWERP (BE)
(74) Representative: Nokia EPO representatives

(56) References cited:
- EP-A1- 1 622 335
- ZHEN CAO ET AL: "FreeSurf", SPECIAL INTEREST GROUP ON DATA COMMUNICATION, ACM, 2 PENN PLAZA, SUITE 701 NEW YORK NY 10121-0701 USA, 17 August 2015 (2015-08-17), pages 357-358, XP058071301, DOI: 10.1145/2785956.2790000 ISBN: 978-1-4503-3542-3
- Diogo Menezes ET AL: "AuthFlow: Authentication and Access Control Mechanism for Software Defined Networking", , 31 October 2014 (2014-10-31), XP055205246, Retrieved from the Internet: URL:http://www.gta.ufrj.br/ftp/gta/TechRep orts/MFD14.pdf [retrieved on 2015-07-29]

## Description

### FIELD OF THE INVENTION

The present invention pertains to the field of connected objects. More specifically, one embodiment of the disclosure relates to a system for authorizing connected objects.

### BACKGROUND

While Internet Service Providers (ISP) and in general Connectivity Service Providers (CSP) are already identifying, authenticating and authorizing directly attached objects to connect to the Internet, to a Packet Data Network (PDN) or to Application Servers, it is not easy for the manufacturer of the objects to identify and to authenticate the connected objects, nor to authorize them to exchange data with the manufacturer's Packet Data Network (PDN) and/or Application Servers. Generally the manufacturer needs to develop its own overlay identification, authentication and security scheme to authorize the communication to a connected object, for example protecting the object from being attacked by sources outside of the manufacturer's Packet Data Network and Application Servers.

When an object is connected (tethered) to an intermediate object such as a smartphone, or Wi-Fi access point to which the ISP provides connectivity, today it is often the intermediate object which is authenticating the tethered object. In that case the ISP cannot identify the connection (set of traffic flows) of each tethered object, and cannot authorize, deny or provide any service to the tethered object.

There is also a growing interest for the ISP or CSP to authenticate and authorize the tethered object besides the intermediate object, especially in cases where the intermediate object is acting as IPv4 router, IPv6 router or bridge (rather than as network address translator), in order that the ISP is then able to distinguish the connection (set of traffic flows) of each tethered object from the connection of the intermediate object.

The ISP or CSP is also facing demand from the manufacturer to benefit from a previous identification and authentication already performed by the ISP or CSP or by an intermediate object.

Considering the huge forecasted number of connected objects and low revenue per object, it will however not be economically viable for the ISP to hold stateful information during the entire connection to the Internet or Packet Data Network, as in today's solutions for Machine-Type Connectivity (like 3GPP R12 LTE Cat 0 devices, 3GPP R13 NB-IoT, EC-GSM, LoRa, Bluetooth, Wi-Fi ...). Following the authentication and authorization phase, the ISP should be able to delete (forget) any stateful information regarding a connected object.

Thus, there is a need for improved techniques that enable the authorized state of connected objects to be removed from ISP and transferred to the Manufacturer or in general to a PDN with which a trust relationship exists.

### SUMMARY

This summary is provided to introduce concepts related to the present inventive subject matter. This summary is not intended to identify essential features of the claimed subject matter nor is it intended for use in determining or limiting the scope of the claimed subject matter.

The invention is defined by the appended independent claims.

In accordance with one embodiment, a method is provided for securely transferring an authorization of connected objects, the method comprising the following steps in a supervision server:
receiving a report on authentication, authorization and accounting of a connected object, said report containing the IP address at which the connected object can be reached and a persistent identifier of the connected object,
determining a manufacturer of the connected object by means of said persistent identifier,
identifying at least one pre-established trust domain associated with said manufacturer, by means of a secure policy associated with said manufacturer, the trust domain defining a set of credentials or certificates and mechanisms for communication between the supervision server and an application server,
producing an authorization state of the connected object by means of the received report,
instructing a network device to be programmed with rules that are identified in the secure policy associated with the manufacturer and that admit the IP address of the connected object, the network device allowing access to the application server,
transmitting a message to the application server via the identified trust domain, the message containing the authorization state of the connected object.

Advantageously, the invention lets Internet Service Providers (ISP) offer a scalable authentication & authorization mechanism to the manufacturers of the connected objects, avoiding that each manufacturer would need an own authentication/authorization scheme to be performed at each connection to their Packet Data Network (PDN) or Application Servers (AS).

Furthermore, the method further permits transmitting the fact that a connected object was authorized (by the ISP or by an intermediate object) from the ISP/CSP to the manufacturers thereby relieving the ISP/CSP from having to hold state per connected object during the entire duration of the connection.

The supervision server authenticates connected objects seeking access to the telecommunication network, rejecting traffic from non-authorized connected objects and preventing access by non-authentic (counterfeit) connected objects.

Following such transfer the infrastructure (gateways, routers) of the ISP becomes stateless. The Packet Data Network (PDN) of the manufacturer thus becomes responsible for the packet inspection and screening process rather than the ISP, which is simply routing the traffic to the Internet. It becomes the responsibility of the manufacturer's PDN to prevent IP address spoofing, for example by only accepting traffic from intermediate ISPs applying Unicast Reverse Path Forwarding (URPF). Or by having the Application Server assigning a session cookie in the Tunneled Layer Security (TLS) association to the connected object, and comparing that cookie to the source IPv4 or IPv6 address of incoming packets at the PDN.

The techniques to prevent IP address spoofing are not part of the present invention but are assumed to be applied.

Equally the connected object or ISP should prevent IP address spoofing, denial-of-service and other attacks in downstream traffic originating from the Internet.

If both conditions are fulfilled the method in the present invention allows eliminating user plane tunnels (Virtual Private Network) between the ISP and the object manufacturer's PDN/AS. Such tunnel would indeed consume state in the ISP's gateways, indicating which object is connected to which VPN.

In an embodiment, the application server is managed by said manufacturer or by a third party organization.

In an embodiment, said report is received from an access provider or an intermediate object that forms a gateway between the connected object and the access provider.

In an embodiment, said report is received from an entity associated with the supervision server.

In an embodiment, said message is transmitted following a previous request or subscription from the application server.

In an embodiment, said message is derived from the report on authentication, authorization and accounting, and contains the IP address or a hardware address at which the connected object can be reached.

In an embodiment, wherein the trust domain relies on a distributed database that is used to transmit the message.

In an embodiment, the network device is a router or switch.

In an embodiment, the rules programmed into the network device apply for upstream unidirectional traffic from the connected object, downstream unidirectional traffic to the connected object, broadcast or multicast traffic.

In an embodiment, the supervision server does not maintain any information about the connected object or the authorization state of the connected object.

In an embodiment, said router removes said rules following inactivity or the absence of any traffic to and from the connected object for a specified time period.

In an embodiment, said persistent identifier is a hardware address related to the connected object.

The invention relates also to a supervision server for securely transferring an authorization of connected objects, comprising:
means for receiving a report on authentication, authorization and accounting of a connected object, said report containing the IP address at which the connected object can be reached and a persistent identifier of the connected object,
means for determining a manufacturer of the connected object by means of said persistent identifier,
means for identifying at least one pre-established trust domain associated with said manufacturer, by means of a secure policy associated with said manufacturer, the trust domain defining a set of credentials or certificates and mechanisms for communication between the supervision server and an application server,
means for producing an authorization state of the connected object by means of the received report,
means for instructing a network device to be programmed with rules that are identified in the secure policy associated with the manufacturer and that admit the IP address of the connected object, the router allowing access to the application server,
means for transmitting a message to the application server via the identified trust domain, the message containing the authorization state of the connected object.

The invention also pertains to a computer program capable of being implemented within a server, said program comprising instructions which, when the program is executed within said server, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for securely transferring the authorization of connected objects; and
- FIG. 2 is an algorithm of a method for securely transferring the authorization of connected objects according to one embodiment of the invention.

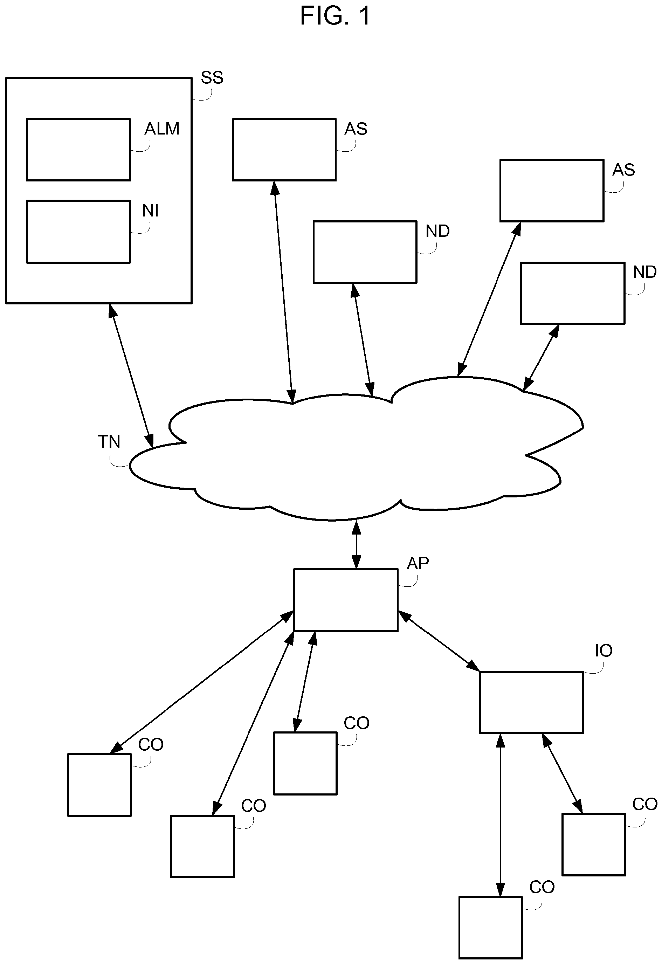

Referring to FIG. 1, a communication system comprises a supervision server SS, a set of application servers AS, a set of network devices ND, an access provider AP, one or multiple intermediate objects IO, and a set of connected objects CO that are able to communicate with the application servers through at least a telecommunication network TN.

The telecommunication network TN may be a wired or wireless network, or a combination of wired and wireless networks. The telecommunication network TN can be associated with a packet network, for example, an IP ("Internet Protocol") high-speed network such as the Internet or an intranet, or even a company-specific private network.

For example, the telecommunication network TN is a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type. Furthermore, the telecommunication network TN can be accessed by a connected object via a wireless link, such as a Wi-Fi network or a Bluetooth link, or via a wired link such as Ethernet.

An access provider AP is a networking hardware device that allows wired or wireless devices to connect to the telecommunication network TN, but does not necessarily authenticate and authorize the connected objects.

Examples of an access provider AP include a Wi-Fi Access Point, Wi-Fi Access Controller, Gateway GPRS Support Node (GGSN), PDN Gateway (PGW), Mobile IP Home Agent (HA), Broadband Network Gateway, LoRa Gateway and/or Network Server, IP router or Ethernet switch.

The access provider AP is managed by an Internet Service Provider or Connectivity Service Provider to which the owner of the connected objects has subscribed.

A connected object CO comprises a network interface connected to the telecommunication network TN, either directly or via an intermediate object IO. The network interface is part of a data processing unit that may be directly embedded in the connected object CO. The connected objects CO may be of different nature. For instance, the connected objects CO may be devices such as an advertisement board, a television set, a household appliance, a communication terminal, a fridge, a camera, a media drive, an information display etc. The connected objects CO may be present in the user's home, in vehicles but also in public environments or other locations, for instance the user's workplace.

An intermediate object IO that forms a gateway may be arranged between a plurality of connected objects and the access provider AP. An intermediate object may be a smartphone, a tablet, a connected vehicle or a computer for example.

Moreover, each connected object CO may offer a plurality of services via its data processing unit having a network interface. A service is a function offered by a connected object which is available through the telecommunication network and therefore may be used or activated by using a communication terminal or server. For instance, a connected object such as a lamp provides a switch-on/switch-off service that permits a communication terminal to switch on or off the lamp remotely through the telecommunication network.

Depending on the service, a connected object communicates with an application server AS that admits incoming traffic from the connected object. On the path between the access provider AP and the application server AS there may be one or multiple intermediate routers or switches.

An application server AS is managed by the manufacturer of one or more connected objects and provides services to these one or more connected objects. Alternatively, the application server AS is managed by a third party organization.

The application server is accessible from the telecommunication network via the network device ND that has to be programmed with rules admitting traffic from authenticated connected objects, whereas other traffic not matching the rules is discarded.

The network device ND can be a router or a switch that is programmed by the supervision server SS via a reference point (interface) over which a protocol such as for example OpenFlow, NetConf or Extensible Messaging and Presence Protocol XMPP is executed.

The supervision server SS includes an allocation module ALM and a network interface NI.

The network interface NI contains communication means to communicate with the access provider AP, the application servers AS and the connected objects.

The allocation module ALM receives reports of identification, authentication and authorization of connected objects from the access provider AP or from an intermediate object IO. The allocation module ALM stores a connection information of a connected object in relation with one or more trust domains. Each manufacturer is associated with one or more trust domains and each trust domain is associated to a unique manufacturer. A trust domain is qualified by a set of credentials or certificates and mechanisms that is shared between the supervision server and the manufacturer and that allows a secure communication between the supervision server and an application server. Examples of implementations of a trust domain include a set of IPSec tunnels, Transport Layer Security TLS associations or a secure distributed database such as BigChainDB®.

More particularly, the allocation module ALM stores secure policies respectively associated with manufacturers. At least, a secure policy contains a table indicating the trust domains that are associated with the manufacturer, defines the set of credentials and mechanisms of the trust domains and describes rules on the manner an application server of the manufacturer or of a third party organization can be accessed.

The connection information includes the IP or Layer 2 address of the connected object and at least one other parameter discovered by the access provider or an intermediate object during the authentication phase : identity, certificate, scanned QR code, location, access technology, available bandwidth and so on, possible subject to permission by the owner of the connected object. The access to the connection information by an application server is secured by an authentication/authorization scheme per trust domain. The supervision server establishes a trust relationship with an application server wishing to interact with a connected object. The connection information can either be pushed to the application server or be pulled from the supervision server via a trust domain.

The supervision server SS can be managed by an Internet service provider to which the owner of the connected objects has subscribed.

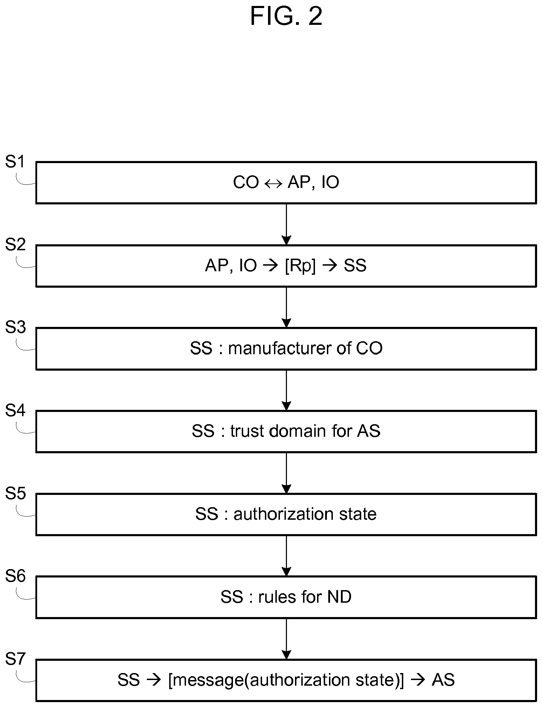

With reference to FIG. 2, a method for securely transferring the authorization of connected objects according to one embodiment of the invention comprises steps S1 to S7 executed by the supervision server SS.

In step S1, a connected object CO is identified, authenticated and authorized by the access provider AP or by an intermediate object IO via an authentication, authorization, and/or accounting (AAA) service, for example according to the document rfc2903.

Alternatively, the connected object CO is identified, authenticated and authorized by an entity associated with or managed by the supervision server SS.

In step S2, the supervision server SS receives a report Rp on authentication, authorization, and/or accounting of a connected object from the access provider AP or the intermediate object IO, the report containing the IP address at which the connected object can be reached and at least one persistent identifier of the connected object CO. For example, the persistent identifier is a hardware address of the connected object, like the MAC address of the connected object.

At this step, the report Rp may contain all information related to the AAA service that is over or only a part of information related to the AAA service that is not over yet.

The authentication phase provides a way of identifying the connected object by means of credentials. The authorization phase allows the connected object to perform defined actions. The accounting phase measures the resources a user consumes during access.

In step S3, the supervision server SS determines a manufacturer of the connected object CO by means of said persistent identifier.

In step S4, the supervision server SS identifies one or more pre-established trust domains associated with the manufacturer of the connected object, by means of a secure policy associated with the manufacturer.

In step S5, the supervision server SS produces an authorization state of the connected object by means of the received report Rp. The authorization state allows the connected object to do certain tasks, eventually with some restrictions. For example, the connected object is allowed for communication with a limited bit rate, e.g. 10kb/s, or in a defined time window.

In step S6, the supervision server SS identifies rules for an access of an application server AS associated with the manufacturer of the connected object by the connected object, by means of the secure policy associated with the manufacturer.

The supervision server SS instructs a network device ND to be programmed with the identified rules, the network device being linked the application server and allowing access to the application server. The network device can be a Virtual Router and Switch implementing the OpenFlow protocol, a physical router implementing the NetConf protocol or a router checking for said identified rules in a distributed database such as e.g. BigChainDB®.

The rules programmed into the network device apply for upstream unidirectional traffic from the connected object, downstream unidirectional traffic to the connected object, broadcast or multicast traffic.

In step S7, the supervision server SS creates a message that is derived from said report Rp on authentication, authorization, and/or accounting and that contains the IP address or a hardware address at which the connected object can be reached. The message contains the authorization state of the connected object with attributes and can contain information about the creation, the update or the deletion of the authorization state of the connected object.

The supervision server SS transmits the message to the application server AS of the manufacturer or of a third party organization via the trust domain associated with the manufacturer. The report can be pushed to the application server or be pulled from the supervision server following a previous request or subscription from the application server.

After transmission of the message, the supervision server does not maintain any information about the connected object or the authorization state of the connected object.

The network device ND can remove the programmed rules after detection of inactivity or the absence of any traffic to and from the connected object for a specified time period.

In one embodiment, the manufacturer has delegated the establishment of said trust domain to a third party organization operating the network device ND and/or the application server AS.

In a first illustrative example, a connected object X1 is identified and authenticated by EAP-TLS (Extensible Authentication Protocol - Transport Layer Security) by the internet service provider and authorized to connect to a LoRa (modulation technology from Low Power Wide Area Network) access network on which it is assigned an address IP@1 (IPv6). The connected object X1 is also identified and authenticated by EAP-TLS and authorized to connect to a Trusted Wi-Fi access network on which it is assigned IP@2 (IPv6).

The supervision server SS receives an authentication report from the internet service provider and determines that the manufacturer of the connected object X1 is organization X from the MAC address or an information (the Issuer) on a pre-installed factory security certificate (X.509v3) of the connected object.

The supervision server SS consults a secure policy associated with manufacturer X and determines that the connected objects of the manufacturer X should be placed in Trust Domains A and B, regardless of the access technology.

For Trust Domain A the supervision server SS has discovered that the Virtual Router & Switch (VRS) 1111::1 linked to an application server of manufacturer X must be programmed with rules admitting individual IP Source Addresses (/128) to networks aaaa::/48 and bbbb::/48. The VRS 1111::1 now admits traffic from IP@1 and IP@2 to networks aaaa::/48 and bbbb::/48.

In an example, a Non-Authentic Object (e.g. a fake copy of object X1) is denied access to the ISP as the QR code which the user has scanned on the Non-Authentic Object does not correspond to (in other words does not confirm) the manufacturer's security certificate which is presented during the EAP-TLS authentication phase. In another example, an attacking Unauthorized Object is denied access to subnet cccc::/48 since its IP Source Address has not been programmed into VRS 2222::1.

In a second illustrative example, a connected object Y2 pairs to an intermediate object via Bluetooth and uses the Bluetooth 4.2 IPSP profile to obtain an address IP@4 (IPv6). The intermediate object sends an authentication report to the supervision server SS via a Syslog message, the report containing a MAC address MAC@Y2 and an IP address IP@4.

The supervision server SS determines that the manufacturer of the connected object Y2 is organization Y from the MAC address MAC@Y2.

The supervision server SS consults a secure policy associated with manufacturer Y and determines that the connected objects of the manufacturer Y should be placed in Trust Domain C, regardless of the access technology.

For Trust Domain C the supervision server SS has discovered that the Virtual Router & Switch (VRS) 2222::1 linked to an application server of manufacturer Y must be programmed with rules admitting individual IP Source Addresses (/128) to network cccc::/48. The VRS 2222::1 now admits traffic from IP@4 to network cccc::/48

In an example, the VRS 2222::1 in the end also admits traffic from IP@3 to network cccc::/48 following successful authentication of a connected object Y1 using a valid certificate to establish an IPSec security association over an Untrusted Wi-Fi access network and being placed in Trust Domain C.

The supervision server itself does not convey any user plane traffic between the connected object CO, the internet service provider, routers, switches and any application server. The router RO only relies on Layer 3 inspection in the user plane without need for deep packet inspection.

The method can further be realized using existing standard protocols, like SDN OpenFlow.

The invention described here relates to a method and a server for securely transferring the authorization of connected objects. According to one implementation of the invention, the steps of the invention are determined by the instructions of a computer program incorporated into the server, such as the supervision server SS. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for securely transferring an authorization of connected objects, the method comprising the following steps in a supervision server (SS):
receiving (S2) a report (Rp) on authentication, authorization and accounting of a connected object (CO), said report containing the IP address at which the connected object can be reached and a persistent identifier of the connected object,
determining (S3) a manufacturer of the connected object (CO) by means of said persistent identifier,
identifying (S4) at least one pre-established trust domain associated with said manufacturer, by means of a secure policy associated with said manufacturer, the trust domain defining a set of credentials or certificates and mechanisms for communication between the supervision server (SS) and an application server (AS),
producing (S5) an authorization state of the connected object by means of the received report (Rp), the authorization state allowing the connected object to perform certain tasks,
instructing (S6) a network device (ND) to be programmed with rules that are identified in the secure policy associated with the manufacturer and that admit the IP address of the connected object that is then allowed to access to the application server (AS) via the network device (ND),
transmitting (S7) a message to the application server (AS) via the identified trust domain, the message containing the authorization state of the connected object.

2. A method according to claim 1, wherein the application server (AS) is managed by said manufacturer or by a third party organization.

3. A method according to claim 1 or 2, wherein said report is received from an access provider or an intermediate object that forms a gateway between the connected object and the access provider.

4. A method according to claim 1 or 2, wherein said report is received from an entity associated with the supervision server (SS).

5. A method according to any of the claims 1 to 4, wherein said message is transmitted following a previous request or subscription from the application server.

6. A method according to any of the claims 1 to 5, wherein said message is derived from the report on authentication, authorization and accounting, and contains the IP address or a hardware address at which the connected object can be reached.

7. A method according to any of the claims 1 to 6, wherein the trust domain relies on a distributed database that is used to transmit said message.

8. A method according to any of the claims 1 to 7, wherein the network device is a router or switch.

9. A method according to any of the claims 1 to 8, wherein the rules programmed into the network device apply for upstream unidirectional traffic from the connected object (CO), downstream unidirectional traffic to the connected object (CO), broadcast or multicast traffic.

10. A method according to any of the claims 1 to 9, wherein the supervision server does not maintain any information about the connected object or the authorization state of the connected object.

11. A method according to any of the claims 1 to 10, wherein said network device removes said rules following inactivity or the absence of any traffic to and from the connected object for a specified time period.

12. A method according to any of the claims 1 to 11, wherein said persistent identifier is a hardware address related to the connected object.

13. A supervision server (SS) for securely transferring an authorization of connected objects, comprising:
means (ALM) for receiving a report (Rp) on authentication, authorization and accounting of a connected object (CO), said report containing the IP address at which the connected object can be reached and a persistent identifier of the connected object,
means (ALM) for determining a manufacturer of the connected object (CO) by means of said persistent identifier,
means (ALM) for identifying at least one pre-established trust domain associated with said manufacturer, by means of a secure policy associated with said manufacturer, the trust domain defining a set of credentials or certificates and mechanisms for communication between the supervision server (SS) and an application server (AS),
means (ALM) for producing an authorization state of the connected object by means of the received report (Rp), the authorization state allowing the connected object to perform certain tasks,
means (ALM) for instructing a network device (ND) to be programmed with rules that are identified in the secure policy associated with the manufacturer and that admit the IP address of the connected object that is then allowed to access to the application server (AS) via the network device (ND),
means (ALM) for transmitting a message to the application server (AS) via the identified trust domain, the message containing the authorization state of the connected object.

14. A computer program capable of being implemented within a supervision server (SS) securely transferring an authorization of connected objects, said program comprising instructions which, when the program is loaded and executed within said supervision server, implement a method as claimed in any of claims 1 to 12.

## Patentansprüche

1. Verfahren zum sicheren Übertragen einer Autorisierung verbundener Objekte, wobei das Verfahren die folgenden Schritte in einem Supervision-Server (SS) umfasst:
Empfangen (S2) eines Reports (Rp) über Authentifizierung, Autorisierung und Buchführung eines verbundenen Objekts ("Connected Object"; CO), wobei der Report die IP-Adresse enthält, an der das verbundene Objekt erreicht werden kann, und eine persistente Kennung des verbundenen Objekts,
Bestimmen (S3) eines Herstellers des verbundenen Objekts (CO) mittels der persistenten Kennung,
Identifizieren (S4) mindestens einer zuvor hergestellten Vertrauensdomäne, die dem Hersteller zugeordnet ist, mittels einer sicheren Richtlinie, die dem Hersteller zugeordnet ist, wobei die Vertrauensdomäne einen Satz von Anmeldeinformationen oder Zertifikaten und Mechanismen für Kommunikation zwischen den Supervision-Servern (SS) und einem Applikationsserver (AS) definieren,
Produzieren (S5) eines Autorisierungszustands des verbundenen Objekts mittels des empfangenen Reports (Rp), wobei der Autorisierungszustand zulässt, dass das verbundene Objekt bestimmte Aufgaben durchführt,
Anweisen (S6) einer Netzwerkvorrichtung ("Network Device"; ND), die mit Regeln zu programmieren ist, die in der sicheren Richtlinie, die dem Hersteller zugeordnet ist, und die IP-Adresse des verbundenen Objekts zulassen, dem dann erlaubt ist, auf den Applikationsserver (AS) über die Netzwerkvorrichtung (ND) zuzugreifen, definieren,
Senden (S7) einer Meldung an den Applikationsserver (AS) über die identifizierte Vertrauensdomäne, wobei die Meldung den Autorisierungszustand des verbundenen Objekts enthält.

2. Verfahren nach Anspruch 1, wobei der Applikationsserver (AS) von dem Hersteller oder von einer Drittorganisation verwaltet wird.

3. Verfahren nach Anspruch 1 oder 2, wobei der Report von einem Zugangsanbieter oder einem Zwischenobjekt empfangen wird, das einen Gateway zwischen dem verbundenen Objekt und dem Zugangsanbieter bildet.

4. Verfahren nach Anspruch 1 oder 2, wobei der Report von einer Entität empfangen wird, die dem Supervision Server (SS) zugeordnet ist.

5. Verfahren nach einem der Ansprüche 1 bis 4, wobei die Meldung nach einer vorherigen Anforderung oder Subskription von dem Applikationsserver gesendet wird.

6. Verfahren nach einem der Ansprüche 1 bis 5, wobei die Meldung aus dem Report über Authentifizierung, Autorisierung und Buchführung abgeleitet wird und die IP-Adresse oder eine Hardwareadresse enthält, an der das verbundene Objekt erreicht werden kann.

7. Verfahren nach einem der Ansprüche 1 bis 6, wobei die Vertrauensdomäne sich auf eine verteilte Datenbank stützt, die verwendet wird, um die Meldung zu senden.

8. Verfahren nach einem der Ansprüche 1 bis 7, wobei die Netzwerkvorrichtung ein Router oder Schalter ist.

9. Verfahren nach einem der Ansprüche 1 bis 8, wobei die Regeln, die in die Netzwerkvorrichtung programmiert sind, für vorgelagerten unidirektionalen Verkehr von dem verbundenen Objekt (CO), nachgelagertem unidirektionalem Verkehr zu dem verbundenen Objekt (CO), Broadcast- oder Multicast-Verkehr gelten.

10. Verfahren nach einem der Ansprüche 1 bis 9, wobei der Supervision-Server keine Informationen über das verbundene Objekt oder den Autorisierungszustand des verbundenen Objekts aufrechterhält.

11. Verfahren nach einem der Ansprüche 1 bis 10, wobei die Netzwerkvorrichtung die Regeln auf Inaktivität oder dem Fehlen von Verkehr zu und von dem verbundenen Objekt für einen bestimmten Zeitraum folgend entfernt.

12. Verfahren nach einem der Ansprüche 1 bis 11, wobei die persistente Kennung eine Hardwareadresse in Bezug auf das verbundene Objekt ist.

13. Supervision-Server (SS) für sicheres Übertragen einer Autorisierung verbundener Objekte, umfassend:
Mittel (ALM) zum Empfangen eines Reports (Rp) über Authentifizierung, Autorisierung und Buchführung eines verbundenen Objekts ("Connected Object"; CO), wobei der Report die IP-Adresse enthält, an der das verbundene Objekt erreicht werden kann, und eine persistente Kennung des verbundenen Objekts,
Mittel (ALM) zum Bestimmen eines Herstellers des verbundenen Objekts (CO) mittels der persistenten Kennung,
Mittel (ALM) zum Identifizieren mindestens einer zuvor hergestellten Vertrauensdomäne, die dem Hersteller zugeordnet ist, mittels einer sicheren Richtlinie, die dem Hersteller zugeordnet ist, wobei die Vertrauensdomäne einen Satz von Anmeldeinformationen oder Zertifikaten und Mechanismen für Kommunikation zwischen den Supervision-Servern (SS) und einem Applikationsserver (AS) definieren,
Mittel (ALM) zum Produzieren eines Autorisierungszustands des verbundenen Objekts mittels des empfangenen Reports (Rp), wobei der Autorisierungszustand zulässt, dass das verbundene Objekt bestimmte Aufgaben durchführt,
Mittel (ALM) zum Anweisen einer Netzwerkvorrichtung (ND), die mit Regeln zu programmieren ist, die in der Sicherheitsrichtlinie identifiziert sind, die dem Hersteller zugeordnet ist und zulässt, dass die IP-Adresse des verbundenen Objekts, der es dann erlaubt ist, auf den Applikationsserver (AS) über die Netzwerkvorrichtung (ND) zuzugreifen,
Mittel (ALM) zum Senden einer Meldung an den Applikationsserver (AS) über die identifizierte Vertrauensdomäne, wobei die Meldung den Autorisierungszustand des verbundenen Objekts enthält.

14. Computerprogramm, das dazu fähig ist, innerhalb eines Supervision-Servers (SS), der eine Autorisierung verbundener Objekte sicher überträgt, implementiert zu werden, wobei das Programm Anweisungen umfasst, die, wenn das Programm in den Supervision-Server geladen und darin ausgeführt wird, ein Verfahren nach einem der Ansprüche 1 bis 12 implementiert.

## Revendications

1. Procédé de transfert sécurisé d'une autorisation d'objets connectés, le procédé comprenant les étapes suivantes, dans un serveur de supervision (SS) :
la réception (S2) d'un rapport (Rp) d'authentification, autorisation et traçabilité d'un objet connecté (CO), ledit rapport contenant l'adresse IP à laquelle l'objet connecté peut être atteint et un identifiant pérenne de l'objet connecté,
la détermination (S3) d'un fabricant de l'objet connecté (CO) au moyen dudit identifiant pérenne,
l'identification (S4) d'au moins un domaine de confiance préétabli associé audit fabricant, au moyen d'une politique de sécurité associée audit fabricant, le domaine de confiance définissant un ensemble d'accréditions ou de certificats et de mécanismes pour la communication entre le serveur de supervision (SS) et un serveur d'application (AS),
la production (S5) d'un état d'autorisation de l'objet connecté au moyen du rapport (Rp) reçu, l'état d'autorisation permettant à l'objet connecté d'effectuer certaines tâches,
l'envoi d'instructions (S6) à un dispositif réseau (ND) à programmer avec des règles qui sont identifiées dans la politique de sécurité associée au fabricant et qui admettent l'adresse IP de l'objet connecté qui est ensuite allouée pour l'accès au serveur d'application (AS) par l'intermédiaire du dispositif réseau (ND),
la transmission (S7) d'un message au serveur d'application (AS) par l'intermédiaire du domaine de confiance identifié, le message contenant l'état d'autorisation de l'objet connecté.

2. Procédé selon la revendication 1, dans lequel le serveur d'application (AS) est généré par ledit fabricant ou par une organisation tiers.

3. Procédé selon la revendication 1 ou 2, dans lequel ledit rapport est reçu d'un fournisseur d'accès ou d'un objet intermédiaire qui forme une passerelle entre l'objet connecté et le fournisseur d'accès.

4. Procédé selon la revendication 1 ou 2, dans lequel ledit rapport est reçu d'une entité associée au serveur de supervision (SS).

5. Procédé selon l'une quelconque des revendications 1 à 4, dans lequel ledit message est transmis à la suite d'une demande ou souscription préalable émanant du serveur d'application.

6. Procédé selon l'une quelconque des revendications 1 à 5, dans lequel ledit message est déduit du rapport d'authentification, autorisation et traçabilité, et contient l'adresse IP ou une adresse matérielle à laquelle l'objet connecté peut être atteint.

7. Procédé selon l'une quelconque des revendications 1 à 6, dans lequel le domaine de confiance s'appuie sur une base de données distribuée qui est utilisée pour transmettre ledit message.

8. Procédé selon l'une quelconque des revendications 1 à 7, dans lequel le dispositif réseau est un routeur ou un commutateur.

9. Procédé selon l'une quelconque des revendications 1 à 8, dans lequel les règles programmées dans le dispositif réseau s'appliquent pour du trafic unidirectionnel de liaison montante provenant de l'objet connecté (CO), du trafic unidirectionnel de liaison descendante allant vers l'objet connecté (CO), du trafic diffusé ou multidiffusé.

10. Procédé selon l'une quelconque des revendications 1 à 9, dans lequel le serveur de supervision ne conserve aucune information concernant l'objet connecté ou l'état d'autorisation de l'objet connecté.

11. Procédé selon l'une quelconque des revendications 1 à 10, dans lequel ledit dispositif réseau retire lesdites règles après une inactivité ou l'absence de tout trafic à destination et en provenance de l'objet connecté pendant une période de temps spécifiée.

12. Procédé selon l'une quelconque des revendications 1 à 11, dans lequel ledit identifiant pérenne est une adresse matérielle associée à l'objet connecté.

13. Serveur de supervision (SS) pour le transfert sécurisé d'une autorisation d'objets connectés, comprenant :
des moyens (ALM) pour recevoir un rapport (Rp) d'authentification, autorisation et traçabilité d'un objet connecté (CO), ledit rapport contenant l'adresse IP à laquelle l'objet connecté peut être atteint et un identifiant pérenne de l'objet connecté,
des moyens (ALM) pour déterminer un fabricant de l'objet connecté (CO) au moyen dudit identifiant pérenne,
des moyens (ALM) pour identifier au moins un domaine de confiance préétabli associé audit fabricant, au moyen d'une politique de sécurité associée audit fabricant, le domaine de confiance définissant un ensemble d'accréditions ou de certificats et de mécanismes pour la communication entre le serveur de supervision (SS) et un serveur d'application (AS),
des moyens (ALM) pour produire un état d'autorisation de l'objet connecté au moyen du rapport (Rp) reçu, l'état d'autorisation permettant à l'objet connecté d'effectuer certaines tâches,
des moyens (ALM) pour envoyer des instructions à un dispositif réseau (ND) à programmer avec des règles qui sont identifiées dans la politique de sécurité associée au fabricant et qui admettent l'adresse IP de l'objet connecté qui est ensuite allouée pour l'accès au serveur d'application (AS) par l'intermédiaire du dispositif réseau (ND),
des moyens (ALM) pour transmettre un message au serveur d'application (AS) par l'intermédiaire du domaine de confiance identifié, le message contenant l'état d'autorisation de l'objet connecté.

14. Programme informatique pouvant être mis en oeuvre dans un serveur de supervision (SS) transférant de manière sécurisée une autorisation d'objets connectés, ledit programme comprenant des instructions qui, lorsque le programme est chargé et exécuté dans ledit serveur de supervision, mettent en oeuvre un procédé selon l'une quelconque des revendications 1 à 12.
